# EUROPÄISCHE PATENTSCHRIFT

(11) **EP 4 163 507 B1**
(45) Veröffentlichungstag und Bekanntmachung des Hinweises auf die Patenterteilung: **02.10.2024**
(21) Anmeldenummer: 22192906.0
(22) Anmeldetag: 30.08.2022
(51) Int. Cl.: F16C 27/06, F16F 1/32, F16F 1/371, F16F 1/38, B60G 15/06, F16C 19/16

(54) **STÜTZLAGER**
SUPPORT BEARING
PALIER DE SUPPORT

(30) Priorität: 05.10.2021 DE 202021105377 U
(43) Veröffentlichungstag der Anmeldung: 12.04.2023
(73) Patentinhaber: BOGE Elastmetall GmbH, 49401 Damme (DE)
(72) Erfinder: ZVERBÍK, Marek, 91701 Trnava (SK); PECHÁC, Peter, 92101 Piestany (SK); SUGEREK, Tomás, 91701 Trnava (SK)
(74) Vertreter: Bossmeyer, Jörg Peter

(56) Entgegenhaltungen:
- DE-A1- 10 041 359
- DE-A1- 102014 218 800
- DE-T2- 602004 001 788

## Beschreibung

Die Erfindung betrifft ein Stützlager mit einem ringförmigen Gehäuse, welches eine sich in einer axialen Richtung erstreckende Längsachse umringt und aus zwei in axialer Richtung übereinander angeordneten, ringförmigen Gehäuseschalen zusammengesetzt ist, von denen eine einen Gehäusedeckel und eine andere einen Gehäuseboden bildet, einem in dem Gehäuse angeordneten, ringförmigen Elastomerkörper, der in axialer Richtung zwischen den Gehäuseschalen eingeschlossen ist und eine zentrale Ringöffnung aufweist, und einem ringförmigen Innenteil, welches in der Ringöffnung des Elastomerkörpers angeordnet und von diesem gehalten ist.

Ein derartiges Stützlager ist aus dem Stand der Technik bekannt, wobei das Gehäuse ganz oder zumindest teilweise aus Metall besteht. Nachteilig an einem Stützlager mit Metallgehäuse ist sein relativ großes Gewicht.

Die DE 10 2014 218 800 A1 offenbart eine Dämpferanordnung eines Fahrzeuges, umfassend: einen Dämpfer zwischen einer Karosserie des Fahrzeuges und einer Radaufhängung, wobei am oberen Ende des Dämpfers ein Dämpferlager ausgebildet ist, ein Stützlager mit einem an der Karosserie befestigten Flansch und einer aus Kunststoff gefertigten Fassung, wobei der Flansch eine zum Dämpfer hin offene Tasche zur Aufnahme des Dämpferlagers aufweist, wobei das Dämpferlager in der Fassung steckt und die Einheit aus Fassung und Dämpferlager von der dem Dämpfer zugewandten Seite in die Tasche eingeschoben ist, oder wobei lediglich das Dämpferlager von der dem Dämpfer zugewandten Seite in die Tasche eingeschoben ist und die Fassung die Tasche verschließt, und wobei zwischen Fassung und Flansch ein Verschlussmechanismus zum Fixieren der Fassung am Flansch ausgebildet ist.

Ausgehend hiervon liegt der Erfindung insbesondere die Aufgabe zugrunde, ein Stützlager leichtgewichtig ausbilden zu können.

Diese Aufgabe wird erfindungsgemäß durch ein Stützlager nach Anspruch 1 gelöst. Bevorzugte Weiterbildungen der Erfindung sind in den Unteransprüchen und in der nachfolgenden Beschreibung gegeben.

Ein Stützlager mit
- einem ringförmigen Gehäuse, welches eine sich in einer axialen Richtung erstreckende Längsachse umringt und aus zwei in axialer Richtung übereinander angeordneten, ringförmigen Gehäuseschalen zusammengesetzt ist, von denen eine einen Gehäusedeckel und eine andere einen Gehäuseboden bildet,
- einem in dem Gehäuse angeordneten, ringförmigen Elastomerkörper, der in axialer Richtung zwischen den Gehäuseschalen eingeschlossen ist und eine zentrale Ringöffnung aufweist, und
- einem ringförmigen Innenteil, welches in der Ringöffnung des Elastomerkörpers angeordnet und von diesem gehalten ist,
   ist erfindungsgemäß insbesondere weitergebildet durch
- einen Stützring, der auf einer dem Gehäusedeckel abgewandten Seite des Gehäusebodens angeordnet und an diesem um die Längsachse drehbar gelagert ist, wobei die Gehäuseschalen aus Kunststoff bestehen.

Durch Gehäuseschalen aus Kunststoff ist das Stützlager besonders leichtgewichtig ausbildbar.

Eine oder jedwede quer zur axialen Richtung und/oder quer zur Längsachse verlaufende Richtung wird insbesondere als radiale Richtung bezeichnet. Eine um die Längsachse herum verlaufende Richtung wird vorzugsweise als Umfangsrichtung bezeichnet. Der Ausdruck wenigstens ein umfasst insbesondere auch die Bedeutung von ein oder genau ein.

Bevorzugt umringen die Gehäuseschalen, insbesondere jeweils, die Längsachse. Vorzugsweise sind die Gehäuseschalen, insbesondere bezüglich der Längsachse, koaxial angeordnet. Bevorzugt umringt der Elastomerkörper die Längsachse. Vorzugsweise ist der Elastomerkörper, insbesondere bezüglich der Längsachse, koaxial mit dem Gehäuse und/oder mit den Gehäuseschalen angeordnet. Bevorzugt umringt das Innenteil die Längsachse. Vorzugsweise ist das Innenteil, insbesondere bezüglich der Längsachse, koaxial mit dem Gehäuse und/oder mit den Gehäuseschalen und/oder mit dem Elastomerkörper angeordnet.

Gemäß einer Ausgestaltung sind die Gehäuseschalen durch wenigstens eine Gehäuse-Schnappverbindung fest miteinander verbunden. Die Gehäuse-Schnappverbindung ist insbesondere eine Kunststoffschnappverbindung. Vorzugsweise sind die Bestandteile der Gehäuse-Schnappverbindung integral mit dem Gehäuse und/oder den Gehäuseschalen ausgebildet. Eine Schnappverbindung lässt sich in der Regel leichtgewichtiger realisieren als z.B. eine Schraubverbindung. Ferner lassen sich die Bestandteile der Gehäuse-Schnappverbindung bei der Herstellung der Gehäuseschalen gleichzeitig mit herstellen. Somit lassen sich der Herstellungsaufwand und/oder der Montageaufwand für das Stützlager reduzieren.

Gemäß einer Weiterbildung weist die Gehäuse-Schnappverbindung einen oder mehrere Schnapphaken auf, die an einer ersten der Gehäuseschalen, insbesondere am Außenumfang der ersten Gehäuseschalen, vorgesehen sind und in wenigstens eine an einer zweiten der Gehäuseschalen vorgesehene, insbesondere radiale, Rastvertiefung eingerastet sind. Hierdurch ist z.B. eine typische Realisierungsmöglichkeit für eine Schnappverbindung gegeben. Bevorzugt sind die Schnapphaken der Gehäuse-Schnappverbindung rings der Längsachse, vorzugsweise im Abstand zueinander, angeordnet. Vorteilhaft ist die Rastvertiefung der Gehäuse-Schnappverbindung ringförmig. Somit können z.B. der oder die Schnapphaken in unterschiedlichen Drehwinkelstellungen der Gehäuseschalen zueinander in die Rastvertiefung einrasten.

Gemäß einer Ausgestaltung weist die zweite Gehäuseschale, bevorzugt an ihrem Außenumfang, einen oder wenigstens einen, vorzugsweise ringförmigen oder teilringförmigen, insbesondere radialen und/oder radial nach außen gerichteten, Rastvorsprung auf, der vorzugsweise die Rastvertiefung der Gehäuse-Schnappverbindung axial in Richtung auf die erste Gehäuseschale begrenzt. Bevorzugt ist die Rastvertiefung der Gehäuse-Schnappverbindung auf einer der ersten Gehäuseschale abgewandten Seite des Rastvorsprungs der zweiten Gehäuseschale vorgesehen.

Gemäß einer Weiterbildung weist jeder Schnapphaken der Gehäuse-Schnappverbindung einen sich in axialer Richtung oder im Wesentlichen in axialer Richtung erstreckenden Biegebalken, der in radialer Richtung, vorzugsweise nach radial außen, elastisch biegbar ist, und eine von dem Biegebalken radial, vorzugsweise nach radial innen, vorstehende Rastnase auf, die in die Rastvertiefung der Gehäuse-Schnappverbindung eingreift und/oder eingerückt ist. Bevorzugt besteht jeder Schnapphaken der Gehäuse-Schnappverbindung aus Kunststoff. Vorzugsweise ist jeder Schnapphaken der Gehäuse-Schnappverbindung integral mit der ersten Gehäuseschale ausgebildet.

Beispielsweise bildet der Gehäusedeckel die erste Gehäuseschale und der Gehäuseboden bildet z.B. die zweite Gehäuseschale. Alternativ bildet z.B. der Gehäuseboden die erste Gehäuseschale und der Gehäusedeckel bildet beispielsweise die zweite Gehäuseschale.

Gemäß einer Ausgestaltung sind rings der Längsachse im Gehäusedeckel mehrere sich in axialer Richtung erstreckende Befestigungshülsen, bevorzugt im Abstand zueinander, angeordnet und/oder eingebettet. Vorzugsweise bestehen die Befestigungshülsen aus Metall. Vorteilhaft erstreckt sich in jede der Befestigungshülsen ein axiales Loch hinein, welches z.B. ein Durchgangsloch ist. Insbesondere erstreckt sich durch jede der Befestigungshülsen ein axiales Durchgangsloch hindurch. Beispielsweise sind die Befestigungshülsen ringförmig ausgebildet. Bevorzugt sind die Befestigungshülsen zumindest auf ihrer dem Gehäuseboden abgewandten Seite offen. Vorzugsweise sind die Befestigungshülsen zylindrisch oder im Wesentlichen zylindrisch. Vorteilhaft sind die Befestigungshülsen, insbesondere jeweils, mit einem Innengewinde versehen.

Vorzugsweise besteht der Stützring aus Kunststoff. Insbesondere bildet der Stützring einen Federteller und/oder eine Federabstützung, vorzugsweise für eine Fahrzeugfeder. Bevorzugt umfasst das Stützlager den Stützring.

Gemäß einer Ausgestaltung ist der Stützring durch wenigstens eine Stützring-Schnappverbindung, insbesondere in axialer Richtung, an dem Gehäuseboden gehalten. Bevorzugt ist die Stützring-Schnappverbindung eine Kunststoffschnappverbindung. Die Stützring-Schnappverbindung dient insbesondere als Verliersicherung für den Stützring, beispielsweise während eines Transports des Stützlagers.

Bevorzugt bilden der Gehäuseboden und der Stützring jeweils einen Verbindungspartner. Vorzugsweise weist die wenigstens eine Stützring-Schnappverbindung einen oder mehrere Schnapphaken auf, die an einem ersten der Verbindungspartner vorgesehen sind und in wenigstens eine an einem zweiten der Verbindungpartner vorgesehene, insbesondere radiale, Rastvertiefung eingerastet sind.

Beispielsweise bildet der Gehäuseboden den ersten Verbindungspartner und der Stützring bildet z.B. den zweiten Verbindungspartner. Bevorzugt sind die Schnapphaken der Stützring-Schnappverbindung an einer dem Stützring zugewandten Unterseite des Gehäusebodens vorgesehen. Alternativ bildet z.B. der Stützring den ersten Verbindungspartner und der Gehäuseboden bildet beispielsweise den zweiten Verbindungspartner.

Bevorzugt sind die Schnapphaken der Stützring-Schnappverbindung rings der Längsachse, vorzugsweise im Abstand zueinander, angeordnet. Vorteilhaft ist die Rastvertiefung der Stützring-Schnappverbindung ringförmig.

Gemäß einer Weiterbildung weist der zweite Verbindungspartner, bevorzugt an seinem Innenumfang, einen oder wenigstens einen, vorzugsweise ringförmigen oder teilringförmigen, insbesondere radialen und/oder radial nach innen gerichteten, Rastvorsprung auf, der vorzugsweise die Rastvertiefung der Stützring-Schnappverbindung axial in Richtung auf den ersten Verbindungspartner begrenzt. Bevorzugt ist die Rastvertiefung der Stützring-Schnappverbindung auf einer dem ersten Verbindungspartner abgewandten Seite des Rastvorsprungs des zweiten Verbindungspartners vorgesehen. Bevorzugt sind in dem Rastvorsprung der Stützring-Schnappverbindung eine oder mehrere Aussparungen vorgesehen, durch welche der oder die Schnapphaken der Stützring-Schnappverbindung in wenigstens einer vorgegebenen Drehwinkelstellung des Gehäusebodens relativ zu dem Stützring in axialer Richtung hindurchgeführt werden können. Somit kann z.B. der Gehäuseboden in der vorgegebenen Drehwinkelstellung von dem Stützring getrennt werden.

Gemäß einer Ausgestaltung weist jeder Schnapphaken der Stützring-Schnappverbindung einen sich in axialer Richtung oder im Wesentlichen in axialer Richtung erstreckenden Biegebalken, der in radialer Richtung, vorzugsweise nach radial innen, elastisch biegbar ist, und eine von dem Biegebalken radial, vorzugsweise nach radial außen, vorstehende Rastnase auf, die in die Rastvertiefung der Stützring-Schnappverbindung eingreift und/oder eingerückt ist. Bevorzugt besteht jeder Schnapphaken der Stützring-Schnappverbindung aus Kunststoff. Vorzugsweise ist jeder Schnapphaken der Stützring-Schnappverbindung integral mit dem ersten Verbindungspartner ausgebildet.

Gemäß einer Weiterbildung ist der Stützring an dem Gehäuseboden mittels eines Wälzlagers um die Längsachse drehbar gelagert. Das Wälzlager ist insbesondere ein Kugellager.

Bevorzugt weist der Gehäuseboden auf seiner dem Gehäusedeckel abgewandten und/oder dem Stützring zugewandten Seite eine, insbesondere integral mit dem Gehäuseboden ausgebildete, erste ringförmige Lauffläche auf, die insbesondere rillenförmig ist und z.B. auch als erste Laufrille bezeichnet werden kann. Vorzugsweise weist der Stützring auf seiner dem Gehäuseboden zugewandten Seite eine, insbesondere integral mit dem Stützring ausgebildete, der ersten Lauffläche axial gegenüberliegende zweite ringförmige Lauffläche auf, die insbesondere rillenförmig ist und z.B. auch als zweite Laufrille bezeichnet werden kann. Vorteilhaft ist das Wälzlager durch die Laufflächen und mehrere Wälzkörper gebildet, die zwischen den Laufflächen angeordnet und beispielsweise durch diese geführt sind. Die Wälzkörper bestehen bevorzugt aus Metall. Insbesondere sind die Wälzkörper Kugeln. Bevorzugt ist die erste Lauffläche, insbesondere stirnseitig, an einem ringförmigen, axialen Vorsprung des Gehäusebodens vorgesehen. Vorzugsweise ist die zweite Lauffläche, insbesondere stirnseitig, an einem ringförmigen, axialen Vorsprung des Stützrings vorgesehen.

Bevorzugt weist der Gehäuseboden auf seiner dem Stützring zugewandten Seite einen oder mehrere, beispielsweise zwei, sich in axialer Richtung erstreckende, die Längsachse umringende und einen radialen Abstand zueinander aufweisende erste Dichtvorsprünge auf. Vorzugsweise weist der Stützring auf seiner dem Gehäuseboden zugewandten Seite einen oder mehrere, beispielsweise zwei, sich in axialer Richtung erstreckende, die Längsachse umringende und einen radialen Abstand zueinander aufweisende zweite Dichtvorsprünge auf, die bevorzugt mit den ersten Dichtvorsprüngen, vorzugsweise unter Ausbildung einer mäanderförmigen Trennfuge zwischen dem Gehäuseboden und dem Stützring, ineinandergreifen. Bevorzugt umringen die Dichtvorsprünge und/oder umringt die Trennfuge das Wälzlager. Vorzugsweise beträgt die Anzahl der Dichtvorsprünge wenigstens drei.

Das Stützlager ist insbesondere für ein Fahrzeug vorgesehen, welches vorzugsweise ein Kraftfahrzeug ist. Bevorzugt ist das Stützlager ein Federbeinstützlager.

Die Erfindung wird nachfolgend anhand einer bevorzugten Ausführungsform unter Bezugnahme auf die Zeichnung beschrieben. In der Zeichnung zeigen:
Fig. 1 eine perspektivische Ansicht eines Stützlagers gemäß einer Ausführungsform,
Fig. 2 eine Draufsicht auf das Stützlager nach Fig. 1 und
Fig. 3 eine Schnittansicht des Stützlagers entlang der aus Fig. 2 ersichtlichen Schnittlinie A-A.

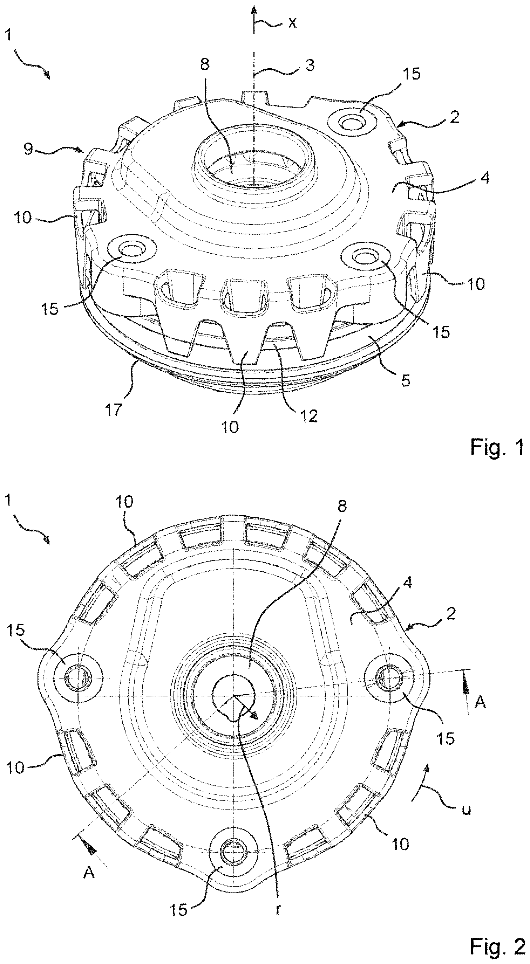

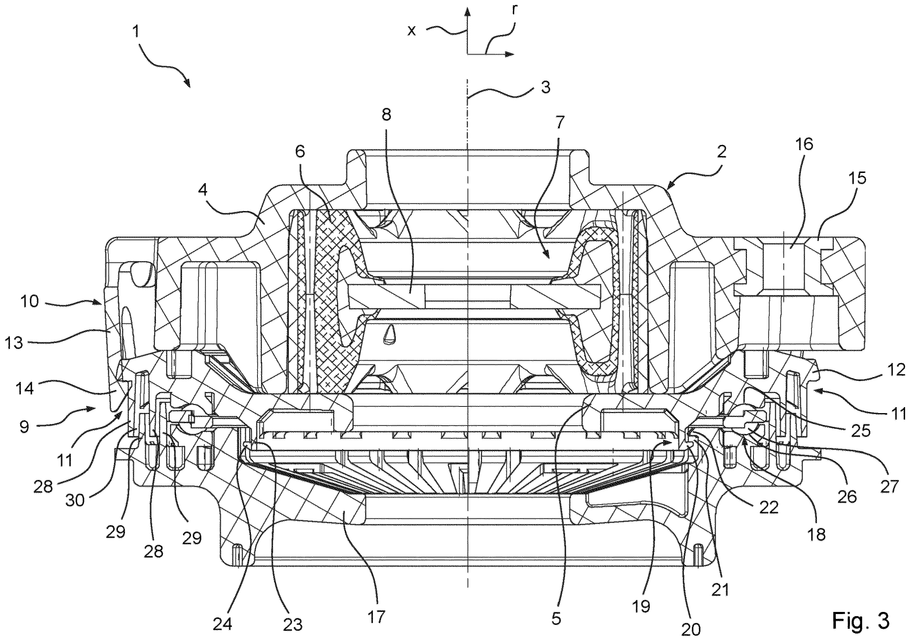

Aus den Fig. 1 bis 3 sind unterschiedliche Ansichten eines Stützlagers 1 gemäß einer Ausführungsform ersichtlich, wobei das Stützlager 1 ein ringförmiges Gehäuse 2, welches eine sich in einer axialen Richtung x erstreckende Längsachse 3 umringt und aus zwei in axialer Richtung x übereinander angeordneten, ringförmigen Gehäuseschalen 4 und 5 aus Kunststoff zusammengesetzt ist, einen in dem Gehäuse 2 angeordneten, ringförmigen Elastomerkörper 6, der in axialer Richtung x zwischen den Gehäuseschalen 4 und 5 eingeschlossen ist und eine zentrale Ringöffnung 7 aufweist, und ein ringförmiges Innenteil 8 umfasst, welches in der Ringöffnung 7 des Elastomerkörpers 6 angeordnet und von diesem gehalten ist.

Eine oder jedwede quer zur Längsachse 3 verlaufende Richtung wird insbesondere als radiale Richtung r bezeichnet. Ferner wird eine um die Längsachse 3 herum verlaufende Richtung insbesondere als Umfangsrichtung u bezeichnet.

Die Gehäuseschalen 4 und 5 sind durch eine Gehäuse-Schnappverbindung 9 fest miteinander verbunden, die mehrere aus Kunststoff bestehende Schnapphaken 10 aufweist, die an einer ersten der Gehäuseschalen 4 vorgesehen, integral mit dieser ausgebildet und in wenigstens eine an einer zweiten der Gehäuseschalen 5 vorgesehene radiale Rastvertiefung 11 eingerastet sind, die ringförmig ausgebildet ist. Die zweite Gehäuseschale 5 weist einen ringförmigen, radialen Rastvorsprung 12 auf, der die Rastvertiefung 11 axial in Richtung auf die erste Gehäuseschale 4 begrenzt.

Jeder Schnapphaken 10 der Gehäuse-Schnappverbindung 9 weist einen sich in oder im Wesentlichen in axialer Richtung x erstreckenden Biegebalken 13, der insbesondere in radialer Richtung r, elastisch biegbar ist, und eine von dem Biegebalken 13 radial vorstehende Rastnase 14 auf, die in die Rastvertiefung 11 der Gehäuse-Schnappverbindung 9 eingerückt ist.

Die erste Gehäuseschale 4 bildet einen Gehäusedeckel und die zweite Gehäuseschale 5 bildet einen Gehäuseboden, wobei rings der Längsachse 3 im Gehäusedeckel 4 mehrere sich in axialer Richtung x erstreckende Befestigungshülsen 15 aus Metall eingebettet sind, durch die sich jeweils z.B. ein axiales Durchgangsloch 16 hindurch erstreckt.

Das Stützlager 1 umfasst ferner einen aus Kunststoff bestehenden Stützring 17, der auf einer dem Gehäusedeckel 4 abgewandten Seite des Gehäusebodens 5 angeordnet und an diesem mittels eines Wälzlagers 18 in Form eines Kugellagers um die Längsachse 3 drehbar gelagert ist. Insbesondere bildet der Stützring 17 einen Federteller.

Der Stützring 17 ist durch eine Stützring-Schnappverbindung 19 in axialer Richtung x an dem Gehäuseboden 5 gehalten, die mehrere aus Kunststoff bestehende Schnapphaken 20 aufweist, die am Gehäuseboden 5 vorgesehen und integral mit diesem ausgebildet sind. An dem Stützring 17 ist eine radiale Rastvertiefung 21 vorgesehen, in welche die Schnapphaken 20 eingerastet sind.

Der Stützring 17 weist an seinem Innenumfang einen Rastvorsprung 22 auf, der die Rastvertiefung 21 der Stützring-Schnappverbindung 19 axial in Richtung auf den Gehäuseboden 5 begrenzt. Bevorzugt sind in dem Rastvorsprung 22 eine oder mehrere Aussparungen vorgesehen, durch welche die Schnapphaken 20 in wenigstens einer vorgegebenen Drehwinkelstellung des Gehäusebodens 5 relativ zu dem Stützring 17 in axialer Richtung x hindurchgeführt werden können. Der Gehäuseboden 5 kann somit in der vorgegebenen Drehwinkelstellung z.B. von dem Stützring 17 getrennt werden. Jeder Schnapphaken 20 der Stützring-Schnappverbindung 19 weist einen sich in axialer Richtung x erstreckenden Biegebalken 23, der insbesondere in radialer Richtung elastisch biegbar ist, und eine von dem Biegebalken 23 radial vorstehende Rastnase 24 auf, die in die Rastvertiefung 21 der Stützring-Schnappverbindung 19 eingerückt ist.

Der Gehäuseboden 5 weist auf seiner dem Stützring 17 zugewandten Seite eine integral mit dem Gehäuseboden 5 ausgebildete, erste ringförmige Laufrille 25 auf. Ferner weist der Stützring 17 auf seiner dem Gehäuseboden 5 zugewandten Seite eine integral mit dem Stützring 17 ausgebildete, der ersten Laufrille 25 axial gegenüberliegende zweite ringförmige Laufrille 26 auf, wobei das Kugellager 18 durch die Laufrillen 25 und 26 sowie durch mehrere Wälzkörper 27 in Form von Kugeln gebildet ist, die zwischen den Laufrillen 25 und 26 angeordnet und durch diese geführt sind.

Der Gehäuseboden 5 weist auf seiner dem Stützring 17 zugewandten Seite mehrere sich in axialer Richtung x erstreckende, die Längsachse 3 umringende und einen radialen Abstand zueinander aufweisende erste Dichtvorsprünge 28 auf. Ferner weist der Stützring 17 auf seiner dem Gehäuseboden 5 zugewandten Seite mehrere sich in axialer Richtung x erstreckende, die Längsachse 3 umringende und einen radialen Abstand zueinander aufweisende zweite Dichtvorsprünge 29 auf, die mit den ersten Dichtvorsprüngen 28 unter Ausbildung einer mäanderförmigen Trennfuge 30 zwischen dem Gehäuseboden 5 und dem Stützring 17 ineinandergreifen.

### Bezugszeichenliste

- 1: Stützlager
- 2: Gehäuse
- 3: Längsachse
- 4: erste Gehäuseschale / Gehäusedeckel
- 5: zweite Gehäuseschale / Gehäuseboden
- 6: Elastomerkörper
- 7: Ringöffnung des Elastomerkörpers
- 8: Innenteil
- 9: Gehäuse-Schnappverbindung
- 10: Schnapphaken
- 11: Rastvertiefung
- 12: Rastvorsprung
- 13: Biegebalken
- 14: Rastnase
- 15: Befestigungshülsen
- 16: Durchgangsloch
- 17: Stützring
- 18: Wälzlager / Kugellager
- 19: Stützring-Schnappverbindung
- 20: Schnapphaken
- 21: Rastvertiefung
- 22: Rastvorsprung
- 23: Biegebalken
- 24: Rastnase
- 25: Laufrille
- 26: Laufrille
- 27: Wälzkörper / Kugel
- 28: Dichtvorsprung
- 29: Dichtvorsprung
- 30: Trennfuge
- x: axiale Richtung
- r: radiale Richtung
- u: Umfangsrichtung

## Patentansprüche

1. Stützlager mit einem ringförmigen Gehäuse (2), welches eine sich in einer axialen Richtung (x) erstreckende Längsachse (3) umringt und aus zwei in axialer Richtung (x) übereinander angeordneten, ringförmigen Gehäuseschalen (4, 5) zusammengesetzt ist, von denen eine einen Gehäusedeckel und eine andere einen Gehäuseboden bildet, einem in dem Gehäuse (2) angeordneten, ringförmigen Elastomerkörper (6), der in axialer Richtung (x) zwischen den Gehäuseschalen (4, 5) eingeschlossen ist und eine zentrale Ringöffnung (7) aufweist, und einem ringförmigen Innenteil (8), welches in der Ringöffnung (7) des Elastomerkörpers (6) angeordnet und von diesem gehalten ist, **gekennzeichnet durch** einen Stützring (17), der auf einer dem Gehäusedeckel (4) abgewandten Seite des Gehäusebodens (5) angeordnet und an diesem um die Längsachse (3) drehbar gelagert ist, wobei die Gehäuseschalen (4, 5) aus Kunststoff bestehen.

2. Stützlager nach Anspruch 1, **dadurch gekennzeichnet, dass** die Gehäuseschalen (4, 5) durch wenigstens eine Gehäuse-Schnappverbindung (9) fest miteinander verbunden sind.

3. Stützlager nach Anspruch 2, **dadurch gekennzeichnet, dass** die Gehäuse-Schnappverbindung (9) einen oder mehrere aus Kunststoff bestehende Schnapphaken (10) aufweist, die an einer ersten der Gehäuseschalen (4) vorgesehen, integral mit dieser ausgebildet und in wenigstens eine an einer zweiten der Gehäuseschalen (5) vorgesehene radiale Rastvertiefung (11) eingerastet sind.

4. Stützlager nach Anspruch 3, **dadurch gekennzeichnet, dass** die zweite Gehäuseschale (5) wenigstens einen radialen Rastvorsprung (12) aufweist, der die Rastvertiefung (11) der Gehäuse-Schnappverbindung (9) axial in Richtung auf die erste Gehäuseschale (4) begrenzt.

5. Stützlager nach Anspruch 3 oder 4, **dadurch gekennzeichnet, dass** jeder Schnapphaken (10) der Gehäuse-Schnappverbindung (9) einen sich in oder im Wesentlichen in axialer Richtung (x) erstreckenden Biegebalken (13), der in radialer Richtung (r), elastisch biegbar ist, und eine von dem Biegebalken (13) radial vorstehende Rastnase (14) aufweist, die in die Rastvertiefung (11) der Gehäuse-Schnappverbindung (9) eingerückt ist.

6. Stützlager nach einem der vorangehenden Ansprüche, **dadurch gekennzeichnet, dass** rings der Längsachse im Gehäusedeckel (4) mehrere sich in axialer Richtung (x) erstreckende Befestigungshülsen (15) aus Metall eingebettet sind, die zumindest auf ihrer dem Gehäuseboden (5) abgewandten Seite offen sind.

7. Stützlager nach einem der vorangehenden Ansprüche, **dadurch gekennzeichnet, dass** der Stützring (17) aus Kunststoff besteht.

8. Stützlager nach einem der vorangehenden Ansprüche, **dadurch gekennzeichnet, dass** der Stützring (17) einen Federteller bildet.

## Claims

1. Support bearing with a ring-shaped housing (2), which surrounds a longitudinal axis (3) extending in an axial direction (x) and is composed of two ring-shaped housing shells (4, 5) arranged on top of each other in an axial direction (x), one of which forms a housing cover and another forms a housing base, a ring-shaped elastomer body (6) arranged in the housing (2), which is enclosed between the housing shells (4, 5) in an axial direction (x) and has a central ring opening (7), and a ring-shaped inner part (8), which is arranged in the ring opening (7) of the elastomer body (6) and held by it, **characterised by** a support ring (17), which is arranged on a side of the housing base (5) facing away from the housing cover (4) and is rotatable on this side about the longitudinal axis (3), wherein the housing shells (4, 5) are made of plastic.

2. Support bearing according to claim 1, **characterised in that** the housing shells (4, 5) are firmly connected to each other by at least one housing snap connection (9).

3. Support bearing according to claim 2, **characterised in that** the housing snap connection (9) has one or more snap hooks (10) made of plastic, which are provided on one of the first housing shells (4), formed integrally with this and engaged in at least one radial locking recess (11) provided on a second of the housing shells (5).

4. Support bearing according to claim 3, **characterised in that** the second housing shell (5) has at least one radial ratchet projection (12), which limits the ratchet recess (11) of the housing snap connection (9) axially in the direction of the first housing shell (4).

5. Support bearing according to either claim 3 or claim 4, **characterised in that** each snap hook (10) of the housing snap connection (9) engages in extending bending beam (13) in or substantially in the axial direction (x), said extending bending beam being able to be elastically bent in the radial direction (r), and having a locking lug (14) protruding radially from the bending beam (13), which is engaged in the locking recess (11) of the housing snap connection (9).

6. Support bearing according to any one of the preceding claims, **characterised in that** around the longitudinal axis in the housing cover (4) a plurality of fastening sleeves (15) extending in an axial direction (x) and made of metal are embedded, which are open at least on their side facing away from the housing base (5).

7. Support bearing according to any one of the preceding claims, **characterised in that** the support ring (17) is made of plastic.

8. Support bearing according to any one of the preceding claims, **characterised in that** the support ring (17) forms a spring plate.

## Revendications

1. Palier de support, avec un carter (2) annulaire qui entoure un axe longitudinal (3) s'étendant dans une direction axiale (x) et qui est composé de deux coques de carter (4, 5) annulaires agencées de manière superposée dans la direction axiale (x), dont l'une forme un couvercle de carter et l'autre forme un fond de carter, avec un corps en élastomère (6) annulaire agencé dans le carter (2), enfermé entre les coques de carter (4, 5) dans la direction axiale (x) et présentant une ouverture annulaire (7) centrale, et avec une pièce intérieure (8) annulaire agencée dans l'ouverture annulaire (7) du corps en élastomère (6) et retenue par celui-ci, **caractérisé par** une bague de support (17) qui est agencée du côté du fond de carter (5) opposé au couvercle de carter (4) et est montée de manière à pouvoir tourner autour de l'axe longitudinal (3) sur celui-ci, les coques de carter (4, 5) étant constituées de plastique.

2. Palier de support selon la revendication 1, **caractérisé en ce que** les coques de carter (4, 5) sont reliées entre elles de manière fixe grâce à au moins une liaison de carter par encliquetage (9).

3. Palier de support selon la revendication 2, **caractérisé en ce que** la liaison de carter par encliquetage (9) présente un ou plusieurs crochet(s) d'encliquetage (10) en matière plastique fourni(s) au niveau d'une première des coques de carter (4), réalisé(s) d'un seul tenant avec celle-ci et encliqueté(s) dans au moins un renfoncement d'encliquetage (11) radial fourni au niveau d'une seconde des coques de carter (5).

4. Palier de support selon la revendication 3, **caractérisé en ce que** la seconde coque de carter (5) présente au moins une saillie d'encliquetage (12) radiale qui délimite le renfoncement d'encliquetage (11) de la liaison de carter par encliquetage (9) axialement en direction de la première coque de carter (4).

5. Palier de support selon la revendication 3 ou 4, **caractérisé en ce que** chaque crochet d'encliquetage (10) de la liaison de carter par encliquetage (9) présente une barre de flexion (13) s'étendant dans, ou essentiellement dans, la direction axiale (x) et qui peut être fléchie de manière élastique dans la direction radiale (r), et un ergot d'encliquetage (14) faisant saillie radialement à partir de la barre de flexion (13) et qui est mis en prise dans le renfoncement d'encliquetage (11) de la liaison de carter par encliquetage (9).

6. Palier de support selon l'une quelconque des revendications précédentes, **caractérisé en ce que** plusieurs manchons de fixation (15) en métal s'étendant dans la direction axiale (x) et ouverts au moins sur leur côté opposé au fond de carter (5) sont incorporés dans le couvercle de carter (4) autour de l'axe longitudinal.

7. Palier de support selon l'une quelconque des revendications précédentes, **caractérisé en ce que** la bague de support (17) est constituée de matière plastique.

8. Palier de support selon l'une quelconque des revendications précédentes, **caractérisé en ce que** la bague de support (17) forme une rondelle élastique.
